# EUROPÄISCHE PATENTANMELDUNG

(11) **EP 4 835 368 A1**
(43) Veröffentlichungstag der Anmeldung: **04.11.2026**
(21) Anmeldenummer: 26174280.3
(22) Anmeldetag: 23.04.2026
(51) Int. Cl.: F24S 25/63, F24S 25/70, H02S 20/23, F24S 25/00

(54) **SOLARMODULHALTER UND HALTESYSTEM**

(30) Priorität: 02.05.2025 DE 102025116961
(71) Anmelder: K2 Systems GmbH, 71272 Renningen (DE)
(72) Erfinder: Schütz, Veit, 70197 Stuttgart (DE)
(74) Vertreter: Gleiss Große Schrell und Partner mbB

(57) **Zusammenfassung**

Die vorliegende Erfindung betrifft einen Solarmodulhalter (10) zur Halterung eines Solarmoduls (2) an einer auf einem Dach (4) montierten oder montierbaren Führungsschiene (5), die ein c-förmiges Querschnittsprofil mit einem Boden (6) und zwei beabstandet und parallel zueinander an dem Boden (6) angeordneten Führungsstegen (7) aufweist, wobei die Führungsstege (7) an ihrem jeweiligen von dem Boden (6) abgewandten Ende (8) einen in Richtung des jeweils gegenüberliegenden Führungsstegs (7) vorstehenden Rückhaltevorsprung (9) aufweisen, wobei der Solarmodulhalter (10) verschwenkbar um eine Schwenkachse (11), die parallel zur Längserstreckung der Führungsschiene (5) ausgerichtet ist, an der Führungsschiene (5) lagerbar ist. Es ist vorgesehen, dass der Solarmodulhalter (10) im Querschnitt einerseits einen Nutsteinabschnitt (13) aufweist, der zur verliersicheren Längsführung in der Führungsschiene (5) zwischen dem Boden (6), den Führungsstegen (7) und den Rückhaltevorsprüngen (9) ausgebildet ist, und andererseits einen Auflageabschnitt (26), der zur Auflage auf den die Rückhaltevorsprünge (9) aufweisenden Enden (8) der Führungsstege (5) ausgebildet ist, wobei der Nutsteinabschnitt (13) und der Auflageabschnitt (26) jeweils zumindest abschnittsweise derart gekrümmt ausgebildet sind, dass der Solarmodulhalter (10) an der Führungsschiene (5) durch den Nutsteinabschnitt (13) und den Auflageabschnitt (26) verschwenkbar ist.

## Beschreibung

Die vorliegende Erfindung betrifft einen Solarmodulhalter zur Halterung eines Solarmoduls an einer auf einem Dach montierten oder montierbaren Führungsschiene, die ein C-förmiges Querschnittsprofil mit einem Boden und zwei beabstandet und parallel zueinander an dem Boden angeordneten Führungsstegen aufweist, wobei die Führungsstege an ihrem jeweiligen von dem Boden abgewandten Ende einen in Richtung des jeweils gegenüberliegenden Führungsstegs vorstehenden Rückhaltevorsprung aufweisen, wobei der Solarmodulhalter verschwenkbar um eine Schwenkachse, die parallel zur Längserstreckung der Führungsschiene ausgerichtet ist, an der Führungsschiene lagerbar ist.

Weiterhin betrifft die Erfindung ein Haltesystem für Solarmodule, mit wenigstens einer längserstreckten, insbesondere gradlinigen Führungsschiene, die ein C-förmiges Querschnittsprofil mit einem Boden und zwei beabstandet und parallel zueinander an dem Boden angeordnete Führungsstege aufweist, wobei die Führungsstege an ihrem jeweiligen von dem Boden abgewandten Ende einen in Richtung des jeweils gegenüberliegenden Führungsstegs vorstehenden Rückhaltevorsprung aufweisen, und mit wenigstens einem an der Führungsschiene um eine Schwenkachse verschenkbar gelagerten oder lagerbaren Solarmodulhalter, wie er obenstehend beschrieben wurde.

Solarmodulhalter und Haltesysteme der eingangs genannten Art sind aus dem Stand der Technik bereits bekannt. Bei der Montage von Solarmodulen auf geneigten Dächern wird die Installation einer einheitlichen Ebene mehrerer Solarmodule angestrebt, um insbesondere ein einheitliches Erscheinungsbild, aber auch eine vorteilhafte Lastverteilung und -einleitung in das Dach, insbesondere das Dachtragwerk, und eine eindeutige, Norm-gerechte Lastermittlung zur Auslegung der Statik des Solarsystems zu ermöglichen. In der Regel wird die Ebene der Solarmodule parallel zur Hüllebene der Dachdeckung beziehungsweise zur Sparren- oder Pfettenebene, die unterhalb der Dachdeckung liegt, gewählt. Derartige Solarmodulhalter müssen also dazu in der Lage sein, Kräfte, die auf die Solarmodule einwirken, auf das Dachtragwerk zu übertragen. Dies sind insbesondere Sogkräfte, Druckkräfte und Hangabtriebskräfte in der Modulebene, die z.B. aus Eigengewicht, Wind- und Schneelasten etc. resultieren können.

Bei Dacheindeckungen, die geschuppt angeordnet sind, ergibt sich in der Regel keine Oberfläche, auf der die Solarmodule direkt parallel montiert werden können, sondern eine Vielzahl von zur Hüllebene winklig angeordneten Montageoberflächen. Bei kleinteiligen Eindeckungen, wie beispielsweise mit Dachziegeln, wird die Befestigung in der Regel derart gelöst, dass ein Befestigungselement, insbesondere Dachhaken, durch eine Lücke zwischen den Dachziegeln hindurchgeführt und auf einem Sparren oder einer Pfette befestigt wird. Ist die Dacheindeckung jedoch großformatig und gleichzeitig geschuppt, so ergeben sich nur wenige Lücken, die zur Befestigung genutzt werden können. In diesem Fall ist es von Vorteil, eine Befestigungslösung einsetzen zu können, die den entstehenden Winkel zwischen Dacheindeckungsoberfläche und Solarmodulebene ausgleicht. Von Vorteil ist es dabei, wenn der Solarmodulhalter nicht nur einen festen Winkel ausgleichen kann, sondern bei der Montage auf unterschiedliche Winkelstellungen individuell anpassbar ist, um eine einheitliche oder ebene Eindeckung eines Dachs mit Solarmodulen in vorteilhafter Weise möglich.

Eine ähnliche Notwendigkeit zum Winkelausgleich ergibt sich, wenn Solarmodule auf Dächer mit zylindrischer Oberfläche (Tonnendächer) montiert werden. Diese sind in der Regel auch mit großformatigen, gewölbten Blechtafeln (Wellblech, Trapezblech, Falzbleche) gedeckt, sodass keine Lücken zum Erreichen der Tragwerksoberfläche vorhanden sind. Beim Installieren von ebenen Solarmodulen auf zylindrische Dachoberflächen entsteht am Befestigungspunkt, der gleichsam ein tangentialer Berührungspunkt ist, ebenfalls ein Winkel, der durch ein kraftübertragendes Element auszugleichen ist. Bei dieser Art von Installation wird eine gleichmäßige Verteilung der Solarmodule auf der zylindrischen Dachoberfläche angestrebt, damit sich gleichmäßige Segmentflächen ergeben.

Der oben beschriebene Winkelausgleich kann auch in anderen Installationen hilfreich sein, wenn beispielsweise durch Ungleichmäßigkeiten im Installationsuntergrund wie zum Beispiel der Dachsparrenebene keine gute und formschlüssige Auflage des Moduls auf anderen Bestandteilen der Solarinstallation gegeben ist. Der vorliegenden Erfindung liegt die Aufgabe zugrunde, einen vorteilhaften Solarmodulhalter zu schaffen, der einen Winkelausgleich kostengünstig und robust erlaubt, und insbesondere auch bei herkömmlichen Führungsschienen einsetzbar ist, sodass bestehende Führungsschienen verwendet und bestehende Haltesysteme durch den vorteilhaften Solarmodulhalter erweitert werden können, um eine Anpassung der Ausrichtung eines zu befestigenden Solarmoduls auf einfache und kostengünstige Weise zu ermöglichen.

Ein gattungsgemäßer Solarmodulhalter ist beispielsweise aus der Offenlegungsschrift DE 10 2021 125 841 A1 bereits bekannt.

Die der Erfindung zugrunde liegende Aufgabe wird durch einen Solarmodulhalter mit den Merkmalen des Anspruchs 1 gelöst. Dieser hat den Vorteil, dass durch die vorteilhafte Ausbildung des Solarmodulhalters dieser vorteilhaft um die Schwenkachse verschwenkbar auch an einer herkömmlichen Führungsschiene lagerbar ist, um dadurch eine vorteilhafte Anpassung der Ausrichtung des Solarmodulhalters und des dadurch befestigten Solarmoduls aufeinem Dach zu ermöglichen beziehungsweise zu gewährleisten. Erfindungsgemäß ist hierzu vorgesehen, dass der Solarmodulhalter in seinem Querschnitt einerseits einen Nutsteinabschnitt aufweist, der zur verliersicheren Längsführung in der Führungsschiene zwischen dem Boden, den Führungsstegen und den Rückhaltevorsprüngen der Führungsschiene ausgebildet ist, und andererseits einen Auflageabschnitt, der zur Auflage auf den die Rückhaltevorsprünge aufweisenden Enden der Führungsstege ausgebildet ist, wobei der Nutsteinabschnitt und der Auflageabschnitt jeweils zumindest abschnittsweise derart gekrümmt ausgebildet sind, dass der Solarmodulhalter an der Führungsschiene durch den Nutsteinabschnitt und den Führungsabschnitt verschwenkbar beziehungsweise verschwenkbar gelagert ist.

Der erfindungsgemäße Solarmodulhalter weist somit einen Nutsteinabschnitt und einen Auflageabschnitt auf, die zur verschwenkbaren Lagerung des Solarmodulhalters an einer herkömmlichen C-förmigen Führungsschiene ausgebildet sind. Durch das Ausbilden des Nutsteinabschnitts derart, dass er zwischen Rückhaltevorsprüngen, den Führungsstegen und dem Boden der Führungsschiene haltbar ist, gewährleistet er eine verliersichere Anordnung des Solarmodulhalters an der Führungsschiene gewährleistet. Insbesondere weist dazu der Nutsteinabschnitt im Querschnitt seitlich vorstehende Seitenränder beziehungsweise Seitenstege auf, die dazu dienen, die Rückhaltevorsprünge zu hintergreifen, beziehungsweise dazu, mit den Rückhaltevorsprüngen einen Hintergriffsitz für eine formschlüssige Halterung des Solarmodulhalters an einer entsprechend ausgebildeten Führungsschiene auszubilden. Dadurch, dass der Solarmodulhalter außerdem einen Auflageabschnitt aufweist, der auf den freien Enden der Führungsstege zur Führung des Solarmodulhalters auflegbar ist, ist der Solarmodulhalter sicher an der Führungsschiene, insbesondere an den Führungsstegen und den Rückhaltevorsprüngen, geführt gehalten, sodass auch hohe Kräfte von dem Solarmodulhalter auf die Führungsschiene sicher übertragen werden können, wodurch die Robustheit des Haltesystems insgesamt optimiert wird. Die Montage erfolgt wie bei herkömmlichen Solarmodulhaltern, die durch eine Nutsteinverbindung in einer Führungsschiene verliersicher gehalten sind, insbesondere indem der Solarmodulhalter mit dem Nutsteinabschnitt in Längserstreckung der Führungsschiene in diese seitlich eingeschoben wird. Vorzugsweise sind der Auflageabschnitt und der Nutsteinabschnitt derart nah zueinander angeordnet, dass der Solarmodulhalter mit geringem Spiel an der Führungsschiene haltbar oder gehalten ist. Dabei berücksichtigt der Abstand insbesondere die Anordnung und Ausprägung der Rückhaltevorsprünge der Führungsschiene, um eine möglichst spielfreie Lagerung zu ermöglichen.

Gemäß einer bevorzugten Weiterbildung der Erfindung sind der Nutsteinabschnitt und/oder der Auflageabschnitt Ringsegment-förmig, insbesondere Kreisringsegment-förmig oder als Ringsegment beziehungsweise Kreisringsegment ausgebildet. Im Querschnitt gesehen erstreckend sich somit der Nutsteinabschnitt und/oder der Auflageabschnitt über ein Ringsegment, wodurch ein vorteilhaftes Zusammenwirken mit der Führungsschiene beim Verschwenken des Solarmodulhalters relativ zu der Führungsschiene um die vorgenannte Schwenkachse gewährleistet wird. Durch die Ringsegmentform, insbesondere die Kreisringsegmentform ergibt sich eine präzise Definierung der Schwenkachse.

Vorzugsweise sind dazu der Nutsteinabschnitt und der Auflageabschnitt jeweils Ringsegmentförmig ausgebildet, wobei der Nutsteinabschnitt und der Auflageabschnitt beziehungsweise die beiden Ringsegmente konzentrisch zueinander angeordnet und ausgebildet sind. Dadurch sind die Ringsegmente jeweils in dieselbe Richtung gekrümmt und weisen denselben Krümmungsmittelpunkt beziehungsweise dasselbe Zentrum der jeweiligen Ringform auf. Somit liegen der Nutsteinabschnitt und der Auflageabschnitt auf Radien der dadurch gemeinsamen definierten Schwenkachse. Dadurch ist ein besonders vorteilhaftes Zusammenwirken mit der Führungsschiene zum Verschwenken des Solarmodulhalters gewährleistet. In Abhängigkeit von den gewählten Radien liegt die Schwenkachse dann beispielsweise im Bereich der Führungsschiene oder hinter dieser.

Weiterhin ist bevorzugt vorgesehen, dass der Nutsteinabschnitt in Schwenkrichtung gesehen kürzer ausgebildet ist als der Auflageabschnitt. Das Ringsegment des Nutsteinabschnitts ist somit kleiner ausgebildet als das Ringsegment des Auflageabschnitts. Hierdurch wird zum einen unterstützt, dass die Schwenkachse im Bereich der Führungsschiene oder hinter der Führungsschiene, von dem Solarmodulhalter aus gesehen, liegt, sodass ein vorteilhaftes Verschwenken um eine hinter der Führungsschiene liegende Schwenkachse ermöglicht ist. Die schmalere Ausbildung des Nutsteinabschnitts und die breitere Ausbildung des Auflageabschnitts erlauben somit zusammen, dass über den gesamten maximal erreichbaren Schwenkwinkel des Solarmodulhalters relativ zu der Führungsschiene der Nutsteinabschnitt und der Auflageabschnitt jeweils mit der Führungsschiene zusammenwirken. Damit ist zum einen ein ungewolltes Lösen des Solarmodulhalters von der Führungsschiene sicher verhindert, und zum anderen eine vorteilhafte Kraftübertragung in jedem möglichen Schwenkwinkels des Solarmodulhalters gewährleistet.

Vorzugsweise ist der Nutsteinabschnitt mit dem Auflageabschnitt durch wenigstens einen Verbindungsabschnitt fest, insbesondere einstückig verbunden. Dadurch ist die Integrität und Robustheit des Solarmodulhalters in vorteilhafter Weise gewährleistet. Optional ist der Verbindungsabschnitt mit zumindest einer Vertiefung, insbesondere mit einer Aussparung versehen, sodass der Solarmodulhalter gewichtssparend und materialsparend hergestellt ist.

Weiterhin sind vorzugsweise der Nutsteinabschnitt, der Auflageabschnitt und der Verbindungsabschnitt bevorzugt einstückig miteinander ausgebildet, sodass der Solarmodulhalter ein Bauteil darstellt, das auch bei der Montage handhabbar ist. Insbesondere ist der Solarmodulhalter als Strangelement ausgebildet, sodass er in Längserstreckung gesehen einen konstanten Querschnitt aufweist.

Weiterhin ist bevorzugt der Verbindungsabschnitt schmaler als der Nutsteinabschnitt beziehungsweise in Schwenkrichtung gesehen kürzer als der Nutsteinabschnitt und insbesondere als die lichte Weite zwischen den Rückhaltevorsprüngen ausgebildet. Der Verbindungsabschnitt erstreckt sich bei bestimmungsgemäßer Montage des Solarmodulhalters von dem außen liegenden Auflageabschnitt zu dem in der Führungsschiene liegenden Nutsteinabschnitt und gewährleistet durch die gewählte Breite, dass der Solarmodulhalter relativ zu der Führungsschiene verschwenkbar ist. Dabei bestimmt die Breite des Verbindungsabschnitts den maximalen Schwenkwinkel, um welchen der Solarmodulhalter um die Schwenkachse herum verschwenkbar ist. Besonders bevorzugt schließen gedachte Geraden, die beidseits des Solarmodulhalters durch den äußersten Punkt des Auflageabschnitts und des Nutsteinabschnitts gezogen werden einen Winkel von 90° oder nahezu 90° ein und treffen sich insbesondere in der Schwenkachse.

Vorzugsweise ist der Verbindungsabschnitt mittig zu dem Nutsteinabschnitt und mittig zu dem Auflageabschnitt angeordnet, sodass der Solarmodulhalter insgesamt vorzugsweise spiegelsymmetrisch in Bezug auf eine Längsmittelachse im Querschnitt gesehen ausgebildet ist. Dadurch ergibt sich zum einen eine einfache und fehlerfreie Montage des Solarmodulhalters, sowie eine vorteilhafte Herstellung. Vorzugsweise weisen dazu der Nutsteinabschnitt und der Auflageabschnitt jeweils Seitenränder beziehungsweise Seitenstege auf, die seitlich von dem Verbindungsabschnitt vorstehen.

Gemäß einer alternativen Ausführungsform ist der Verbindungsabschnitts außermittig zu Nutsteinabschnitt und Auflageabschnitt angeordnet, um einen Solarmodulhalter bereitzustellen, der beispielsweise auf Dächer mit besonders starken Neigungen montiert werden soll, um einen erhöhten Winkelausgleich zu ermöglichen.

Gemäß einer bevorzugten Weiterbildung der Erfindung ist auf der von dem Nutsteinabschnitt abgewandten Seite des Solarmodulhalters ein C-förmiges Aufnahmeprofil für ein Halteelement ausgebildet. Durch das C-förmige Aufnahmeprofil bildet der Solarmodulhalter eine einfache Kontaktstelle für ein herkömmliches Halteelement, das zur Befestigung eines Solarmoduls an dem Solarmodulhalter einsetzbar ist.

Besonders bevorzugt ist das Aufnahmeprofil des Solarmodulhalters als weitere Führungsschiene ausgebildet, um eine vorteilhafte Anordnung des Halteelements entlang des Solarmodulhalters zu ermöglichen. Vorzugsweise ist das Halteelement Bestandteil des Solarmodulhalters oder eines Solarmodulhaltersystems, das das Halteelement und den Solarmodulhalter aufweist. Besonders bevorzugt ist die weitere Führungsschiene des Solarmodulhalters identisch zu der Führungsschiene ausgebildet, an welcher der Solarmodulhalter befestigt werden kann oder soll. Dadurch können Halteelemente, die ansonsten zur Befestigung des Solarmoduls an der einen Führungsschiene bereits eingesetzt werden können, nunmehr zur Befestigung eines Solarmoduls an dem Solarmodulhalter verwendet werden. Dadurch wird die Teilezahl geringgehalten und der Solarmodulhalter bietet eine hohe Anwendungsflexibilität.

Besonders bevorzugt ist der Solarmodulhalter als Strangprofil, insbesondere Strangpressprofil ausgebildet, sodass er einen durchgehend konstanten Querschnitt beziehungsweise eine durchgehend konstante Querschnittsform aufweist, wie obenstehend bereits erwähnt.

Gemäß einer bevorzugen Weiterbildung der Erfindung weist der Solarmodulhalter an zumindest einer Stirnseite, insbesondere im Bereich des Verbindungsabschnitts, einen Axialanschlag auf, , der dazu ausgebildet ist, mit einer Stirnseite der Führungsschiene zusammenzuwirken. Vorzugsweise weist hierzu der Solarmodulhalter zumindest eine Vertiefung zur zumindest bereichsweisen Aufnahme und Halterung des Axialanschlags auf. Durch den Axialanschlag und das Zusammenwirken mit Solarmodulhalter einerseits und Führungsschiene andererseits wird eine Festlegung des Solarmodulhalters in Längserstreckung der Führungsschiene ermöglicht oder bewirkt. Insbesondere handelt sich bei dem Axialanschlag um eine Befestigungsschraube, die in die Vertiefung, die hierzu optional ein entsprechendes Gewinde aufweist, eingeschraubt ist, wobei die Befestigungsschraube einen Schraubenkopf aufweist oder mit einer Unterlegscheibe zusammenwirkt, die derart groß in ihrem Außendurchmesser ausgebildet sind, dass der Schraubenkopf oder die Unterlegscheibe mit der Führungsschiene an deren Stirnseite in Axialrichtung formschlüssig zusammenwirkt, um ein Verschieben des Solarmodulhalters relativ zu der Führungsschiene in zumindest eine Richtung sicher zu verhindern. Alternativ oder zusätzlich ist der Axialanschlag an dem Solarmodulhalter stoffschlüssig befestigt, insbesondere durch Kleben oder Schweißen.

Das erfindungsgemäße Haltesystem mit den Merkmalen des Anspruchs 13 zeichnet sich durch die erfindungsgemäße Ausbildung des Solarmodulhalters aus. Es ergeben sich hierdurch die oben bereits genannten Vorteile.

Vorzugsweise liegt der insbesondere gemeinsame Mittelpunkt der Ringsegmentformen beziehungsweise das Zentrum und damit die Schwenkachse des Ringsegment-förmigen Nutsteinabschnitts und des Ringsegment-förmigen Auflageabschnitts im Bereich der Führungsschiene oder auf der von dem Solarmodulhalter abgewandten Seite der Führungsschiene, um ein vorteilhaftes Verschwenken des Solarmodulhalters um die Führungsschiene herum zu gewährleisten. Es ergeben sich hierdurch die oben bereits genannten Vorteile.

Weiterhin ist bevorzugt vorgesehen, dass die Breite des Verbindungsabschnitts und/oder des Nutsteinabschnitts in Abhängigkeit von einem vorgegebenen maximalen Schwenkwinkel gewählt ist, und dass die Breite des Auflageabschnitts derart gewählt ist, dass der Auflageabschnitt innerhalb des maximalen Schwenkwinkels auf den Führungsstegen aufliegt oder aufliegen kann. Hierdurch ist ein dauerhaftes Anliegen des Auflageabschnitts an der Führungsschiene unabhängig vom eingestellten Schwenkwinkel stets gewährleistet, sodass eine vorteilhafte Kraftübertragung dauerhaft gewährleistet ist.

Weitere Vorteile und bevorzugte Merkmale und Merkmalskombinationen ergeben sich insbesondere aus dem zuvor Beschriebenen sowie aus den Ansprüchen. Im Folgenden soll die Erfindung anhand der Zeichnung näher erläutert werden. Dazu zeigen
**Figur 1** ein Haltesystem für Solarmodule in einer vereinfachten Seitenansicht,
**Figur 2** eine perspektivische Detailansicht des Haltesystems,
**Figur 3** einen Solarmodulhalter des Haltesystems in einer perspektivischen Darstellung,
**Figur 4** eine vereinfachte Schnittdarstellung des Haltesystems,
**Figuren 5A bis C** unterschiedliche Ausführungsbeispiele des Solarmodulhalters, und
**Figuren 6A bis C** ein weiteres Ausführungsbeispiel des Haltesystems.

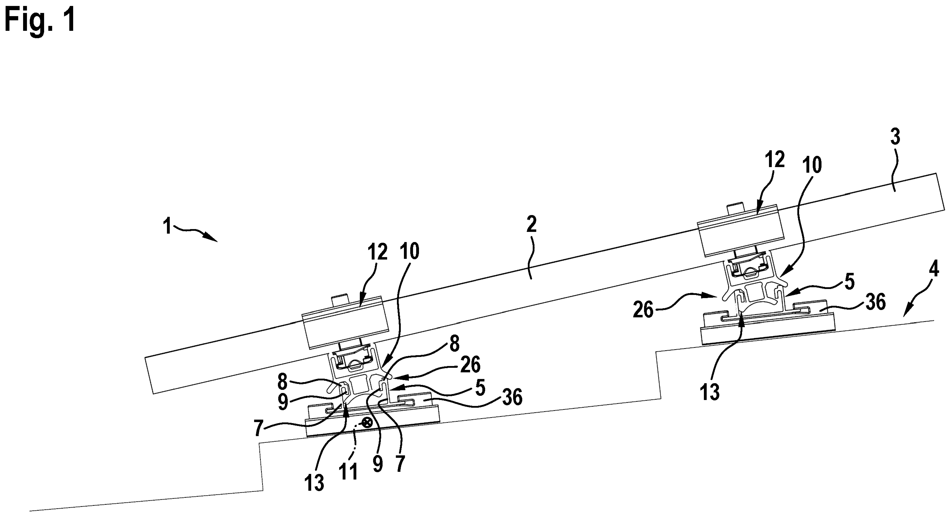

**Figur 1** zeigt in einer vereinfachten Seitenansicht ein vorteilhaftes Haltesystem 1 für ein oder mehrere Solarmodule 2. In der Regel weist jedes Solarmodul 2 einen die elektrischen/elektronischen Komponenten tragenden Rahmen 3 auf, der durch das Haltesystem 1 an einem Dach 4 eines Gebäudes befestigbar ist. Um eine vorteilhafte Ausrichtung mehrerer Solarmodule 2 in einer gemeinsamen Ebene unabhängig von der Beschaffenheit des Dachs 4 zu gewährleisten, weist das Haltesystem 1 Mittel für einen vorteilhaften Winkelausgleich auf.

Im vorliegenden Ausführungsbeispiel ist die Dachneigung des Dachs 4 durch einen stufenförmigen Aufbau des Dachs 4 gekennzeichnet. Das Solarmodul 2 ist schräg in Bezug auf eine Horizontale ausgerichtet, um der Dachneigung vorteilhaft zu folgen. Damit ist das Solarmodul 2 jedoch geneigt zu der Oberseite der jeweiligen Stufe ausgerichtet. Um eine sichere und robuste Haltung des Solarmoduls 2 zu gewährleisten, ist das vorliegende Haltesystem 1 bevorzugt wie im Folgenden beschrieben ausgebildet.

Das Haltesystem 1 weist mehrere Führungsschienen 5 auf, die direkt oder unter Zuhilfenahme von Befestigungsmitteln 36 an dem Dach 4 befestigt sind.

Die jeweilige Führungsschiene 5 ist als Strangprofil ausgebildet, weist also einen durchgehend konstanten beziehungsweise gleichbleibenden Querschnitt, wie in der Seitenansicht von Figur 1 zu erkennen ist, auf. Die Führungsschiene 5 weist einen Boden 6 auf, an welchem zwei Führungsstege 7 angeordnet sind, die beabstandet und parallel zueinander ausgerichtet sind. Die Führungsstege 7 stehen dabei von derselben Seite des Bodens 6 vor und weisen vorliegend die gleiche Höhe auf. An ihren freien, von dem Boden 6 abgewandten Enden 8 weisen die Führungsstege 7 jeweils einen nach innen beziehungsweise dem jeweils gegenüberliegend angeordneten Führungssteg 7 zugewandten Rückhaltevorsprung 9 auf, sodass sich insgesamt eine C-förmige Querschnittsform der jeweiligen Führungsschiene 5 ergibt.

An der jeweiligen Führungsschiene 5 sind ein oder mehrere Solarmodulhalter 10 angeordnet. Die Solarmodulhalter 10 und die Führungsschienen 5 sind derart ausgebildet, dass sie den oben genannten Winkelausgleich ermöglichen, wobei hierzu der Solarmodulhalter 10 um eine Schwenkachse 11 relativ zu der Führungsschiene 5 verschwenkbar ist, und wobei die Schwenkachse 11 sich in Längserstreckung beziehungsweise parallel zu der Führungsschiene 5 erstreckt.

An den Solarmodulhalter 10 ist weiterhin ein Halteelement 12 befestigbar oder befestigt, durch welches der Rahmen 3 des Solarmoduls 2 zwischen dem Halteelement 12 und dem Solarmodulhalter 10 verspannbar gehalten ist.

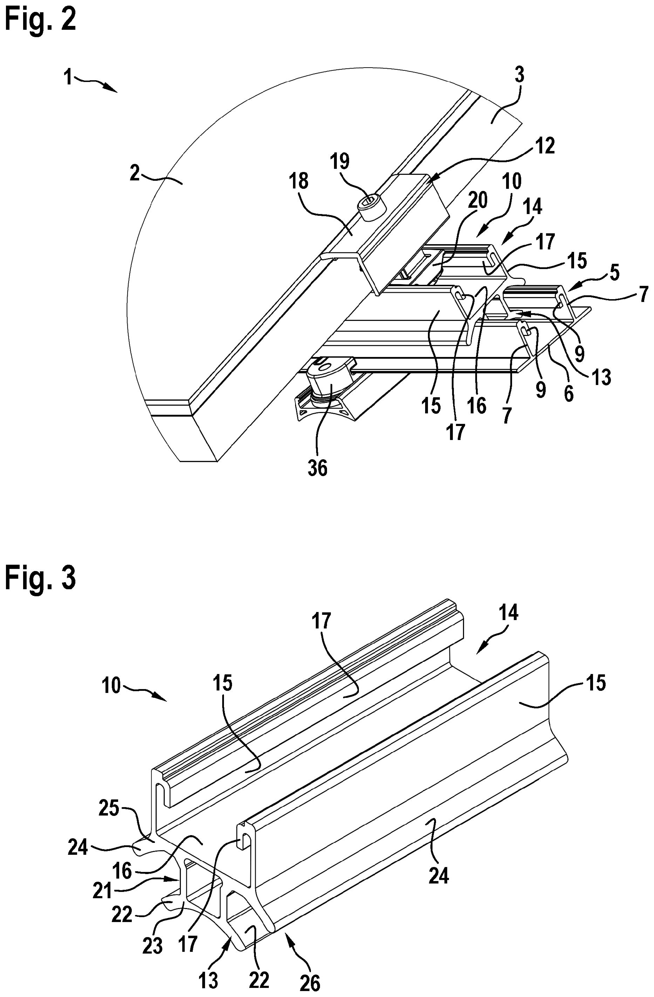

**Figur 2** zeigt eine perspektivische Detailansicht des Haltesystems 1 im Bereich des in **Figur 1** links gezeigten Solarmodulhalters 10. Der Solarmodulhalter 10 weist einen Nutsteinabschnitt 13 auf, der in der Führungsschiene 5 längsverschieblich beziehungsweise in Längserstreckung der Führungsschiene 5 gelagert ist. Dazu ist der Nutsteinabschnitt 13 derart ausgebildet, dass er zwischen dem Boden 6, den Führungsstegen 7 und den Rückhaltevorsprüngen 9 formschlüssig und verliersicher in der Führungsschiene 5 gehalten ist. Dazu weist der Nutsteinabschnitt 13 eine Breite auf, die schmaler als die lichte Weite zwischen den Führungsstegen 7 ist, jedoch größer als die lichte Weite zwischen den Rückhaltevorsprüngen 9 ist.

Auf seiner dem Nutsteinabschnitt 13 abgewandten Seite weist der Solarmodulhalter 10 eine weitere Führungsschiene 14 auf, die gemäß dem vorliegenden Ausführungsbeispiel identisch zu der Führungsschiene 5 ausgebildet ist, also ebenfalls zwei beabstandet zueinander angeordnete und parallel zueinander ausgerichtete Führungsstege 15 aufweist, die von einem Boden 16 in dieselbe Richtung vorstehen, wobei die Führungsstege 15 an ihren von dem Boden 16 abgewandten Enden jeweils einen dem gegenüberliegenden Führungssteg 15 zugewandten Rückhaltevorsprung 17 aufweisen.

Das Halteelement 12 ist mehrteilig ausgebildet, mit einer Halteklammer 18, die den Rahmen 3 umgreift, und mit einer Befestigungsschraube 19, die durch die Halteklammer 18 geführt ist, um mit einem Nutsteinelement 20 zusammenzuwirken, das in der Führungsschiene 14 zwischen dem Boden 16, den Führungsstegen 15 und den Rückhaltevorsprüngen 17 geführt ist. Durch das Anziehen der Befestigungsschraube 19 wird das Solarmodul 2 zwischen der Klammer 18 und den freien Enden der Führungsstege 15, auf welchen das Solarmodul 2 mit dem Rahmen 3 aufliegt, vorteilhaft verspannt und dadurch kraftschlüssig und formschlüssig an dem Dach 4 befestigt.

Weil die Führungsschiene 14 identisch zu der Führungsschiene 5 ausgebildet ist, können im Bauteilsystem bereits vorhandene Halteelemente 12, die beispielsweise bisher an der Schiene 5 montiert werden konnten, nunmehr auch an der Schiene 14 des Solarmodulhalters 10 montiert werden, um das Solarmodul 2 zu befestigen.

**Figur 3** zeigt den Solarmodulhalter 10 in einer perspektivischen Darstellung. Der Boden 16 des Solarmodulhalters 10 ist durch einen Verbindungsabschnitt 21 mit dem Nutsteinabschnitt 13 einstückig verbunden. Der Verbindungsabschnitt 21 weist dabei einen wesentlichen quadratischen Querschnitt auf, ist insoweit hohlzylinderförmig ausgebildet.

Der Nutsteinabschnitt 13 weist Seitenränder 22 auf, die seitlich über den Verbindungsabschnitt 21 vorstehen, und insoweit auch als Seitenstege bezeichnet werden können. Die Seitenränder 22 sind dabei gekrümmt ausgebildet, sodass sie entlang einer Kreisform verlaufen, und insoweit zusammen ein Kreisringsegment 23 mit einem vorgegebenen Krümmungsradius ausbilden.

Der Boden 16 der weiteren Führungsschiene 14 geht außenseitig ebenfalls in Seitenränder 24 oder Seitenstege über, die beidseits von dem Boden 16 und damit über die Führungsstege 15 hinaus vorstehen. Auch die Seitenränder 24 bilden zusammen ein Kreisringsegment 25 aus, das insoweit durch den Verbindungsabschnitt 21 mit dem Kreisringsegment 23 einstückig verbunden ist.

Das Kreisringsegment 25 bildet einen Auflageabschnitt 26 aus, der dazu dient, auf der Führungsschiene 5 aufzuliegen, wie in **Figur 2** und auch in **Figur 1** beispielhaft gezeigt.

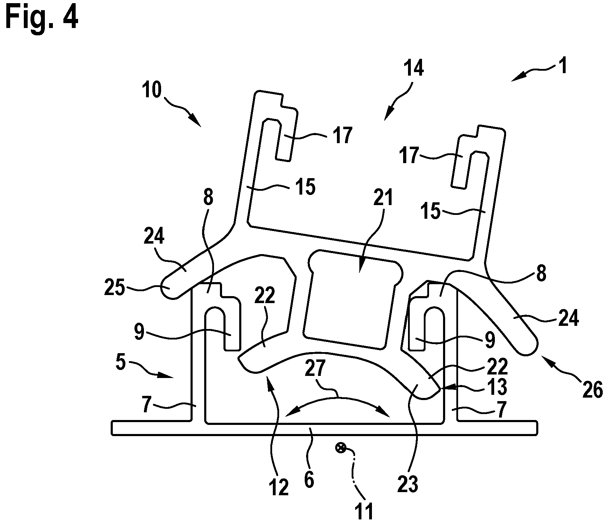

**Figur 4** zeigt hierzu in einer vergrößerten Seitenansicht das Zusammenwirken von dem Solarmodulhalter 10 mit der Führungsschiene 5. Der Solarmodulhalter 10 wird seitlich in die Führungsschiene 5 eingeführt, sodass der Nutsteinabschnitt 13 mit dem Ringsegment 23 innerhalb des C-förmigen Querschnitts der Führungsschiene 5 liegt, wie obenstehend bereits beschrieben, und damit zwischen dem Boden 6, den Führungsstegen 7 und den Rückhaltevorsprüngen 9, die in den Raum zwischen den Führungsstegen 7 nach innen vorstehen.

Das Kreisringsegment 23 ist dabei derart ausgebildet, dass es schmaler ist als der Abstand zwischen den Führungsstegen 7 und größer als der Abstand zwischen den Rückhaltevorsprüngen 9. Hierdurch ist der Nutsteinabschnitt 13 beziehungsweise das Ringsegment 23 des Solarmodulhalters 10 einerseits in der Führungsschiene 5 längs geführt und andererseits verliersicher an dieser gehalten. Nur ein seitliches Herausziehen kann zu einem Lösen des Solarmodulhalters 10 von der Führungsschiene 5 führen.

Der Abstand zwischen Nutsteinabschnitt 13 und dem Auflageabschnitt 26 ist dabei durch den Verbindungsabschnitt 21derart gewählt, dass, wie insbesondere in **Figur 4** gezeigt, im montierten Zustand der Auflageabschnitt 25 auf den freien Enden der Führungsstege 7 aufliegt, während der Nutsteinabschnitt 13 hinter den Rückhaltevorsprüngen 9 gehalten beziehungsweise gefangen ist. Insbesondere ist dabei der Solarmodulhalter 10 im Wesentlichen spielfrei oder mit nur kleinem Spiel an der Führungsschiene 5 quer zur Längserstreckung der Führungsschiene 5 gehalten. Durch die Ausbildung des Auflageabschnitts 26 und des Nutsteinabschnitts 13 jeweils als Kreisringsegment ergibt sich dabei, dass der Solarmodulhalter 10 relativ zu der Führungsschiene 5 um die Schwenkachse 11, die sich parallel zur Längserstreckung der Führungsschiene 5 erstreckt, verschwenkbar gelagert ist, wie durch einen Doppelpfeil 27 in **Figur 4** angezeigt.

Die vorteilhaft ausgebildeten Kreisringsegmente 23, 25 bilden somit zusammen mit der Führungsschiene 5 ein Schwenklager aus. Weil es sich dabei bei der Führungsschiene 5 um eine herkömmliche Führungsschiene handelt, ist somit ein vorbekanntes Haltesystem durch den vorteilhaften Solarmodulhalter 10 in vorteilhafter Weise weiterbildbar durch das Hinzufügen eines Winkelausgleichs, wie er bei einer Dachkonstruktion gemäß **Figur 1** notwendig werden kann.

Durch die vorteilhafte Ausbildung des Solarmodulhalters 10 können vorbekannte Führungsschienen verwendet werden, sodass nicht auf komplizierte Neugestaltungen mit besonderen Dreh- oder Schwenkgelenken zurückgegriffen werden muss, die sich bereits in den Führungsschienen zeigen beziehungsweise diese ersetzen. Dadurch wird die Teilezahl insgesamt reduziert und auch eine Anpassung verschiedener Haltesysteme durch den vorteilhaften Solarmodulhalter 10 in vorteilhafter Weise und kostengünstig ermöglicht.

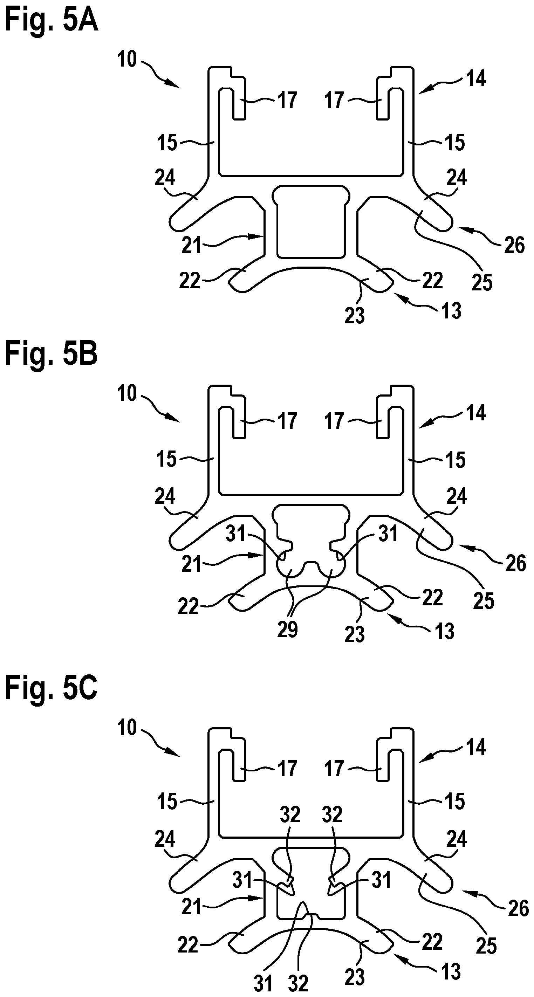

**Figuren 5A bis C** zeigen unterschiedliche Ausführungsbeispiele des Solarmodulhalters 10 in jeweils einer Seitenansicht, wobei sich die Ausführungsbeispiele durch die Formgebung des Verbindungsabschnitts 21 voneinander unterscheiden. **Figur 5A** zeigt den Solarmodulhalter 10 wie er bereits aus Figur 4 bekannt ist.

Gemäß dem Ausführungsbeispiel von **Figur 5B** weist der Verbindungsabschnitt 21 zwei zylinderförmige Öffnungen 29 auf, die in diesem Ausführungsbeispiel randseitig bereichsweise offen ausgebildet sind. Die Öffnungen 29 dienen zur Aufnahme beispielsweise eines Verbindungsbolzens, der durch die jeweilige Öffnung 29, und damit durch den Solarmodulhalter 10, hindurchgeschoben ist, um an seinen jeweils über den Solarmodulhalter 10 axial vorstehenden Enden mit einer Befestigungsmutter und gegebenenfalls einer Unterlegscheibe vervollständigt zu werden, welche sich über den Solarmodulhalter 10 hinaus zumindest bereichsweise über die Führungsschiene 5 erstrecken, um dadurch einen Formschluss zwischen Solarmodulhalter 10 und Führungsschiene 5 in Axialerstreckung gesehen zu erzielen, der ein ungewolltes Lösen des Solarmodulhalters 10 von der Führungsschiene 5 sicher formschlüssig verhindert.

Gemäß einem weiteren Ausführungsbeispiel ist die jeweilige Öffnung 29 mit einem Schraubgewinde 30 versehen, in welches eine Befestigungsschraube oder ein Befestigungsbolzen gegebenenfalls unter Zwischenschaltung einer Unterlegscheibe einschraubbar ist, sodass anstelle eines durchgehenden Bolzens an dem Solarmodulhalter 10 Befestigungsschrauben beidseits eingeschraubt werden können, um den axialen Formschluss zu erzielen.

**Figur 5C** zeigt ein weiteres Ausführungsbeispiel, bei welchem in dem Verbindungsabschnitt 21 ein Schraubgewinde 31 eingeformt ist, wobei das Schraubgewinde 31 in drei voneinander beabstandet angeordneten Vorsprüngen 32 ausgebildet ist, die auf einen gemeinsamen Mittelpunkt in dem Verbindungsabschnitt 21 zuweisen und beispielsweise im Abstand von 120 Grad zueinander verteilt im Innenraum des Verbindungsabschnitts 21 angeordnet sind. Sie weisen jeweils Gewindeabschnitte an ihren freien Enden auf, die zusammen das Gewinde 31 ausbilden, an welches ein oder mehrere Befestigungsschrauben einseitig oder beidseitig in den Solarmodulhalter 10 einschraubbar sind.

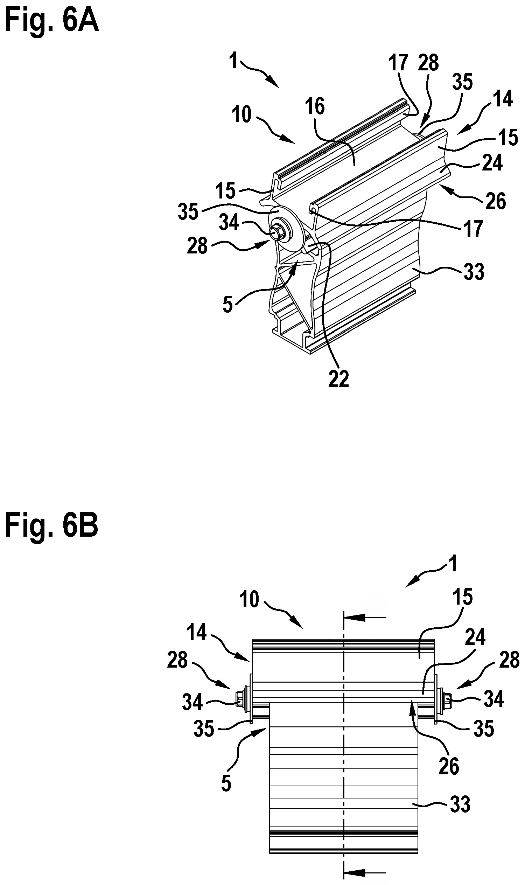

**Figuren 6A bis C** zeigen ein weiteres Ausführungsbeispiel des Haltesystems 1, wobei hier die **Figur 6A** im Unterschied zum vorherigen Ausführungsbeispiel des Haltesystems 1 die Führungsschiene 5 hier eine deutlich größere Höhe durch einen verlängerten Unterbau 33 unterhalb des Bodens 6, also auf der von der Führungsschiene 5 abgewandten Seite, aufweist. Der Unterbau 33 erstreckt sich dabei beispielsweise bis zu dem Dach 4 und erlaubt dadurch einen größeren Abstand zwischen Solarmodul 2 und Dach 4.

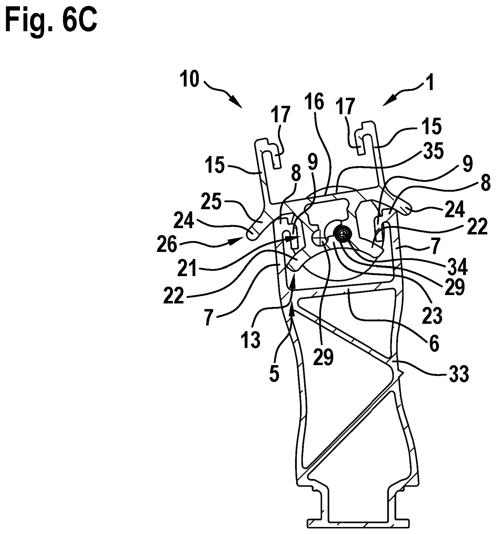

In diesem Ausführungsbeispiel von **Figuren 6A****, B und C** ist außerdem zumindest eine beispielhaft gezeigte Befestigungsschraube 34 vorhanden, die mit Zwischenwirkung einer Unterlegscheibe 35 einen axialen Formschluss zwischen der Führungsschiene 12 und dem Solarmodulhalter 10 gewährleistet, wie er in Bezug auf Figuren 4A bis C bereits erwähnt wurde. **Figur 6A** zeigt dazu das Haltesystem 1 in einer perspektivischen Darstellung, **Figur 6B** zeigt das Haltesystem 1 in einer Seitenansicht und **Figur 6C** zeigt das Haltesystem 1 in einer Schnittdarstellung.

Durch die Befestigungsschraube 34 zusammen mit der Unterlegscheibe 35 wird ein Axialanschlag 28 gebildet, der das formschlüssige Arretieren des Solarmodulhalters 10 an der Führungsschiene 5 gewährleistet. Die Unterlegscheibe 35 weist dazu einen derart großen Außendurchmesser auf, dass sie sowohl den Solarmodulhalter 10 als auch Bereiche der Führungsschiene 5, zumindest der Rückhaltevorsprünge 9, überdeckt, um den axialen Formschluss zu gewährleisten. Vorzugsweise sind auf beiden Seiten des Solarmodulhalters 10 jeweils ein solcher Axialanschlag 28 vorhanden, um eine Arretierung des Solarmodulhalters 10 in beide Schieberichtungen entlang der Führungsschiene 5 sicher zu gewährleisten.

Wie in **Figur 6B** erkennbar ist, sind die beiden Befestigungsschrauben 34 jeweils in eine der Öffnungen 29 eingeschraubt. **Figur 6C** zeigt, dass in diesem Fall die Ausbildung des Verbindungsabschnitts 21 dem Ausführungsbeispiel von **Figur 5B** entspricht.

Alternativ zu dem Vorfertigen von Schaubgewinden 31 sind die eine oder mehreren Befestigungsschrauben selbstschneidend ausgebildet und dadurch in die jeweilige Öffnung 29 eingeschraubt.

### BEZUGSZEICHENLISTE

- 1: Haltesystem
- 2: Solarmodul
- 3: Rahmen
- 4: Dach
- 5: Führungsschiene
- 6: Boden
- 7: Führungsstege
- 8: freies Ende
- 9: Rückhaltevorsprung
- 10: Solarmodulhalter
- 11: Schwenkachse
- 12: Halteelement
- 13: Nutsteinabschnitt
- 14: Führungsschiene
- 15: Führungsstege
- 16: Boden
- 17: Rückhaltevorsprung
- 18: Halteklammer
- 19: Befestigungsschraube
- 20: Nutsteinelement
- 21: Verbindungsabschnitt
- 22: Seitenränder
- 23: Kreisringsegment
- 24: Seitenränder
- 25: Kreisringsegment
- 26: Auflageabschnitt
- 27: Doppelpfeil
- 28: Axialanschlag
- 29: Öffnungen
- 30: Schraubgewinde
- 31: Schraubgewinde
- 32: Vorsprünge
- 33: Unterbau
- 34: Befestigungsschraube
- 35: Unterlegscheibe
- 36: Befestigungsmittel

## Patentansprüche

1. Solarmodulhalter (10) zur Halterung eines Solarmoduls (2) an einer auf einem Dach (4) montierten oder montierbaren Führungsschiene (5), die ein c-förmiges Querschnittsprofil mit einem Boden (6) und zwei beabstandet und parallel zueinander an dem Boden (6) angeordneten Führungsstegen (7) aufweist, wobei die Führungsstege (7) an ihrem jeweiligen von dem Boden (6) abgewandten Ende (8) einen in Richtung des jeweils gegenüberliegenden Führungsstegs (7) vorstehenden Rückhaltevorsprung (9) aufweisen, wobei der Solarmodulhalter (10) verschwenkbar um eine Schwenkachse (11), die parallel zur Längserstreckung der Führungsschiene (5) ausgerichtet ist, an der Führungsschiene (5) lagerbar ist, **dadurch gekennzeichnet, dass** der Solarmodulhalter (10) im Querschnitt einerseits einen Nutsteinabschnitt (13) aufweist, der zur verliersicheren Längsführung in der Führungsschiene (5) zwischen dem Boden (6), den Führungsstegen (7) und den Rückhaltevorsprüngen (9) ausgebildet ist, und andererseits einen Auflageabschnitt (26), der zur Auflage auf den die Rückhaltevorsprünge (9) aufweisenden Enden (8) der Führungsstege (5) ausgebildet ist, wobei der Nutsteinabschnitt (13) und der Auflageabschnitt (26) jeweils zumindest abschnittsweise derart gekrümmt ausgebildet sind, dass der Solarmodulhalter (10) an der Führungsschiene (5) durch den Nutsteinabschnitt (13) und den Auflageabschnitt (26) verschwenkbar ist.

2. Solarmodulhalter nach Anspruch 1, **dadurch gekennzeichnet, dass** der Nutsteinabschnitt (13) und/oder der Auflageabschnitt (26) ringsegmentförmig, insbesondere kreisringsegmentförmig ausgebildet sind.

3. Solarmodulhalter nach einem der vorhergehenden Ansprüche, **dadurch gekennzeichnet, dass** der Nutsteinabschnitt (13) und der Auflageabschnitt (26) jeweils ringsegmentförmig, insbesondere kreisringsegmentförmig ausgebildet sind, wobei der Nutsteinabschnitt (13) und der Auflageabschnitt (26) konzentrisch zueinander angeordnet und ausgebildet sind.

4. Solarmodulhalter nach einem der vorhergehenden Ansprüche, **dadurch gekennzeichnet, dass** der Nutsteinabschnitt (13) in Schwenkrichtung gesehen kürzer ausgebildet ist als der Auflageabschnitt (26).

5. Solarmodulhalter nach einem der vorhergehenden Ansprüche, **dadurch gekennzeichnet, dass** der Nutsteinabschnitt (13) mit dem Auflageabschnitt (26) durch wenigstens einen Verbindungsabschnitt (21) fest verbunden ist.

6. Solarmodulhalter nach einem der vorhergehenden Ansprüche, **dadurch gekennzeichnet, dass** der Nutsteinabschnitt (13), der Auflageabschnitt (26) und der Verbindungsabschnitt (21) einstückig miteinander ausgebildet sind.

7. Solarmodulhalter nach einem der vorhergehenden Ansprüche, **dadurch gekennzeichnet, dass** der Verbindungsabschnitt (21) schmaler als der Nutsteinabschnitt (13) ausgebildet ist.

8. Solarmodulhalter nach einem der vorhergehenden Ansprüche, **dadurch gekennzeichnet, dass** der Verbindungsabschnitt (21) mittig oder außermittig zu dem Nutsteinabschnitt (13) und mittig oder außermittig zu dem Auflageabschnitt (26) angeordnet ist.

9. Solarmodulhalter nach einem der vorhergehenden Ansprüche, **dadurch gekennzeichnet, dass** auf der von dem Nutsteinabschnitt (13) abgewandten Seite des Solarmodulhalters (10) ein c-förmiges Aufnahmeprofil für ein Halteelement (12) ausgebildet ist.

10. Solarmodulhalter nach einem der vorhergehenden Ansprüche, **dadurch gekennzeichnet, dass** das Aufnahmeprofil als weitere Führungsschiene (14) ausgebildet ist, die insbesondere identisch zu der einen Führungsschiene (5) ist.

11. Solarmodulhalter nach einem der vorhergehenden Ansprüche, **dadurch gekennzeichnet, dass** der Solarmodulhalter (10) als Strangprofil ausgebildet ist.

12. Solarmodulhalter nach einem der vorhergehenden Ansprüche, **dadurch gekennzeichnet, dass** der Solarmodulhalter (10) an zumindest einer Stirnseite einen Axialanschlag (28) aufweist, der dazu ausgebildet ist, mit einer Stirnseite der Führungsschiene (5) zusammenzuwirken.

13. Haltesystem (1) für Solarmodule (2), mit wenigstens einer längserstreckten, insbesondere geradlinigen Führungsschiene (5), die ein c-förmiges Querschnittsprofil mit einem Boden (6) und zwei beabstandet und parallel zueinander an dem Boden (6) angeordnete Führungsstegen (7) aufweist, wobei die Führungsstege (7) an ihrem jeweiligen von dem Boden (6) abgewandten Ende (8) einen in Richtung des jeweils gegenüberliegenden Führungsstegs (7) vorstehenden Rückhaltevorsprung (9) aufweisen, und mit wenigstens einem an der Führungsschiene (5) um eine parallel zur Längserstreckung der Führungsschiene ausgerichtete Schwenkachse (11) verschwenkbar gelagerten oder lagerbaren Solarmodulhalter (10), **dadurch gekennzeichnet, dass** der Solarmodulhalter (10) gemäß einem der Ansprüche 1 bis 12 ausgebildet ist.

14. Haltesystem nach Anspruch 13, **dadurch gekennzeichnet, dass** die Schwenkachse (11) oder der insbesondere gemeinsame Mittelpunkt der Ringformen von Nutsteinabschnitt (13) und Auflageabschnitt (26) im Bereich der Führungsschiene (5) oder auf der von dem Solarmodulhalter (10) abgewandten Seite der Führungsschiene (5) liegt.

15. Haltesystem nach Anspruch 13, **dadurch gekennzeichnet, dass** die Breite des Verbindungsabschnitts (21) und/oder des Nutsteinabschnitts (13) in Abhängigkeit von einem vorgegebenen maximalen Schwenkwinkel gewählt ist, und dass die Breite des Auflageabschnitts (26) derart gewählt ist, dass der Auflageabschnitt (26) innerhalb des maximalen Schwenkwinkels auf den freien Enden (8) der Führungsstege (7) aufliegt oder aufliegen kann.
